# EUROPEAN PATENT SPECIFICATION

(11) **EP 2 796 960 B1**
(45) Date of publication and mention of the grant of the patent: **27.09.2017**
(21) Application number: 14165650.4
(22) Date of filing: 23.04.2014
(51) Int. Cl.: G06F 1/26

(54) **Power supply circuit in electronic device and control method thereof**
Stromversorgungsschaltung in einem elektronischen Gerät und Steuerverfahren dafür
Circuit d'alimentation dans un appareil électronique et son procédé de commande

(30) Priority: 23.04.2013 KR 20130044718
(43) Date of publication of application: 29.10.2014
(73) Proprietor: Samsung Electronics Co., Ltd., Gyeonggi-do 443-742 (KR)
(72) Inventor: Hong, Seung-Su, 443-742 Gyeonggi-do (KR); Kang, Seung-Beom, 443-742 Gyeonggi-do (KR); Kim, Chul-Kwi, 443-742 Gyeonggi-do (KR); Han, Jung-Hun, 443-742 Gyeonggi-do (KR)
(74) Representative: HGF Limited

(56) References cited:
- EP-A2- 2 402 864
- US-A1- 2003 030 412
- US-B1- 7 151 356

## Description

### BACKGROUND OF THE INVENTION

### 1. Field of the Invention

Certain embodiments of the present invention provide a power supply circuit for an electronic device, an electronic device comprising the power supply circuit, and a control method thereof. For example, certain embodiments of the present invention provide a power supply circuit for an electronic device that includes a battery and is configured to receive externally supplied power (e.g. power supplied from a power source external to the electronic device), an electronic device comprising the power supply circuit, and a control method thereof.

### 2. Description of the Related Art

The use of certain types of portable electronic devices, for example smart phones and tablet Personal Computers (PCs), has risen dramatically in recent years. Typically, a smart phone or tablet PC according to the related art has an internal battery that supplies power for operation, and further includes a power interface, such as a 30-pin connector, through which the device may receive externally supplied power. When receiving externally supplied power, a smart phone or tablet PC according to the related art may interrupt the power supply from the battery to a system of the device (e.g. comprising one or more components of the device).

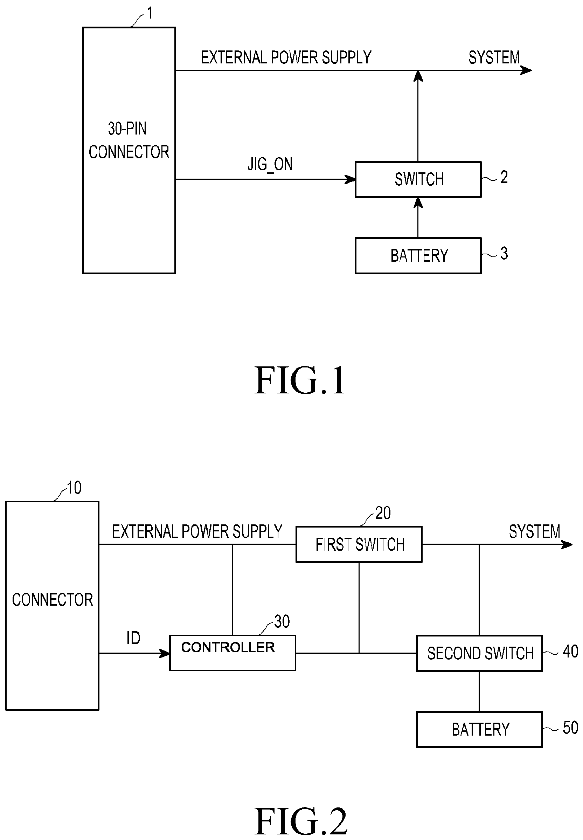

FIG. 1 is a block diagram of a smart phone or tablet PC according to the related art, which includes a 30-pin connector 1, a switch 2, and a battery 3.

The smart phone or tablet PC illustrated in FIG. 1 receives externally supplied power via the 30-pin connector 1, and delivers the received external power to a system of the device (e.g. comprising one or more components of the device), at which time the power supply from the battery 3 to the system is interrupted. For example, the smart phone or tablet PC illustrated in FIG. 1 may receive a JIG_ON signal through one pin of the 30-pin connector 1 (e.g. a specific pin to which the JIG_ON signal is assigned).

Upon receiving the JIG_ON signal, the switch 2 is controlled so as to be switched to an OFF state, in which case the battery 3 is disconnected from the system, thereby interrupting the power supply from the battery 3 to the system.

Upon receiving the external power, the smart phone or tablet PC illustrated in Figure 1 interrupts all connections between the battery 3 and the system. The smart phone or tablet PC illustrated in Figure 1 may be required to undergo a process test before the battery is re-connected thereto.

When the smart phone or tablet PC comprises a built-in battery, a JIG_ON signal may be assigned to a separate connector for the process test. In addition, in certain devices, the 30-pin connector may be replaced with a Universal Serial Bus (USB) connector.

US 2003/0030412 A1 describes a technique for controlling the flow of power in an electronic device.

Therefore, there is a need for a power supply circuit, an electronic device comprising the power supply circuit, and a control method thereof, for interrupting a power supply from a built-in battery transferred through a USB connector to a system of the electronic device, and for supplying received external power to the system.

### SUMMARY OF THE INVENTION

It is an aim of certain embodiments of the present invention to address, solve, mitigate or obviate, at least partly, at least one of the problems and/or disadvantages associated with the related art, for example at least one of the problems and/or disadvantages described herein. Certain embodiments of the present invention aim to provide at least one advantage over the related art, for example at least one of the advantages described herein.

Accordingly, certain embodiments of the present invention provide a power supply circuit for an electronic device capable of interrupting the power supply from a battery depending on IDentifier (ID) data and external power, an electronic device comprising the power supply circuit, and a control method thereof.

In accordance with an aspect of the present invention, there is provided a power supply circuit for an electronic device, according to claim 1. In accordance with another aspect of the present invention, there is provided a control method of a power supply circuit for an electronic device, according to claim 9. Certain exemplary embodiments are as defined in dependent claims 2-8 and 10.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram of a smart phone or tablet PC according to the related art;
FIG. 2 is a block diagram of an electronic device according to an exemplary embodiment of the present invention;
FIG. 3 illustrates a control method of a power supply circuit in an electronic device according to an exemplary embodiment of the present invention;
FIG. 4 illustrates a control method of a power supply circuit in an electronic device according to another exemplary embodiment of the present invention;
FIG. 5 is a block diagram of an electronic device according to another exemplary embodiment of the present invention;
FIG. 6 illustrates a control method of a power supply circuit in an electronic device according to another exemplary embodiment of the present invention;
FIG. 7 illustrates a circuit diagram of a second switch and its peripheral units according to an exemplary embodiment of the present invention;
FIG. 8 illustrates a circuit diagram of a first switch, a controller and their peripheral units according to an exemplary embodiment of the present invention; and
FIG. 9 illustrates a circuit diagram of a determiner and its peripheral units.

Throughout the drawings, the same or similar reference numerals may be used to refer to the same or similar parts, steps, operations, processes, features, elements, components, and/or structures.

### DETAILED DESCRIPTION OF EMBODIMENTS OF THE INVENTION

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that the present invention is not restricted or limited to the described embodiments, and that various changes and modifications of the embodiments described herein can be made without departing from the scope of the invention.

Detailed descriptions of well-known functions, processes, operations, features, elements, components, structures and constructions may be omitted for the sake of clarity and conciseness, and to avoid obscuring the subject matter of the present invention.

The terms and words used in the following description and claims are not limited to their dictionary meanings, but are merely used to enable a clear and consistent understanding of the invention. Accordingly, it should be apparent to those skilled in the art that the following description of exemplary embodiments of the present invention is provided for illustration purposes only and not for the purpose of limiting the invention, as defined by the appended claims.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context clearly dictates otherwise. Thus, for example, reference to "a component surface" includes reference to one or more of such surfaces.

Throughout the description and claims of this specification, by the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

Throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

FIG. 2 is a block diagram of an electronic device according to an embodiment of the present invention. The electronic device may include a connector (or any other suitable type of interface) 10, a first switch (or any other suitable type of component for selectively interrupting an electrical path) 20, a controller 30, a second switch (or any other suitable type of component for selectively interrupting an electrical path) 40, and a battery 50. The electronic device may be implemented in any suitable form, such as a mobile communication terminal, a Personal Digital Assistant (PDA), a Personal Computer (PC), a smart phone, and a tablet PC. It will be apparent to those of ordinary skill in the art that embodiments of the present invention are not restricted to the types of electronic devices described herein.

The connector 10 may be a connector capable of connecting the electronic device to one or more other electronic devices, such as a computer. The connector may also be capable of connecting the electronic device to an external power supply, which may be provided by another electronic device or by a dedicated power supply. The connector 10 may enable data exchange to be performed between the electronic device and the other electronic devices. The connector 10 may supply the external power supplied from an external power supply to the electronic device. The connector 10 may be implemented in any suitable form, such as a standard connector, a micro connector, and an on-the-go connector. It will be apparent to those of ordinary skill in the art that embodiments of the present invention are not restricted to the types of the connector 10 described herein. For example, if the electronic device is implemented as a smart phone or tablet PC, the connector 10 may be implemented as a micro USB connector, which is provided with a voltage of about 5V, and may transmit and receive packet data defined by the standard. Although a single connector 10 is illustrated in Figure 2, in certain exemplary embodiments, the function of the connector 10 illustrated in Figure 2 may be provided by two or more separate connectors or interfaces.

The connector 10 may be connected to the first switch 20, and may also be connected to the controller 30. The first switch 20 and the controller 30 may be connected to the connector 10 in parallel. The connector 10 may have a connection terminal into which a plug may be inserted. The connection terminal of the connector 10 may include a plurality of pins. If the connector 10 is a micro USB connector, its connection terminal may include 11 pins. Separate data or power may be input to each of the plurality of pins of the connection terminal of the connector 10. For example, external power may be input to a first pin of the connector 10, and an information-carrying signal (e.g. a signal carrying ID data) may be input to a second pin thereof. If the connector 10 is implemented as a micro USB connector, the external power may be applied to a VBAT_2 pin of the micro USB connector. In addition, the ID data being input to the micro USB connector may be USB ID data.

The connector 10 may output the received external power to the first switch 20, and output the received information-carrying signal (e.g. a signal carrying ID data) to the controller 30. The first switch 20 may be connected to the connector 10 to receive the external power, and may be connected to a system (not shown) to output the received external power to the system. The system may comprise, for example, one or more components of the electronic device (i.e. electronic components that require power to operate). The system may receive the external power which it uses for operation of the electronic device. The first switch 20 may be connected to the controller 30 and the second switch 40. As described above, if the first switch 20 is controlled to be switched to a first state (e.g. an ON state), the external power supplied from the connector 10 may be output to the system. If the first switch 20 is controlled to be switched to a second state (e.g. an OFF state), the external power supplied from the connector 10 may not be output to the system.

The controller 30 may control the first/second (e.g. ON/OFF) state of the first switch 20. The controller 30 generates and outputs a control signal for controlling ON/OFF state of the first switch 20, thus to control the ON/OFF state of the first switch 20. For example, if the first switch 20 is implemented with a Field Effect Transistor (FET), the controller 30 may be connected to a gate terminal of the first switch 20. The controller 30 may control the ON/OFF state of the first switch 20 by changing a gate voltage applied to the gate terminal. For example, the controller 30 may control the first switch 20 to be switched to the OFF state, if it determines not to supply the external power to the system. If the controller 30 determines to supply the external power to the system, the controller 30 may control the first switch 20 to be switched to the ON state.

The second switch 40 may determine the connection state between the battery 50 and the system as a first state (e.g. ON state) or a second state (e.g. OFF state). The controller 30 may also control the first/second (e.g. ON/OFF) state of the second switch 40, thereby connecting or disconnecting the battery 50 to/from the system. For example, if the second switch 40 is controlled to be switched to a first state (e.g. an ON state), power supplied from the battery 50 may be output to the system. If the second switch 40 is controlled to be switched to a second state (e.g. an OFF state), the power supplied from the battery 50 may not be output to the system. Accordingly, the controller 30 may control the second switch 40 to be switched to the OFF state if the controller30 determines not to supply power of the battery 50 to the system. If the controller 30 determines to supply power of the battery 50 to the system, the controller 30 may control the second switch 40 to be switched to the ON state.

The battery 50 may supply the power required for operation of the electronic device. The battery 50 may be detachably or fixedly mounted in the electronic device. The battery 50 may supply power to the system if there is no external power. On the other hand, if there is external power, the battery 50 may charge itself using the external power.

The controller 30 may control the ON/OFF state of the first switch 20 and the ON/OFF state of the second switch 40 based on the information carried by the received information-carrying signal (e.g. ID data) and on whether the external power is provided (e.g. whether the connector 10 is connected to an external power supply that is capable of providing power to the system).

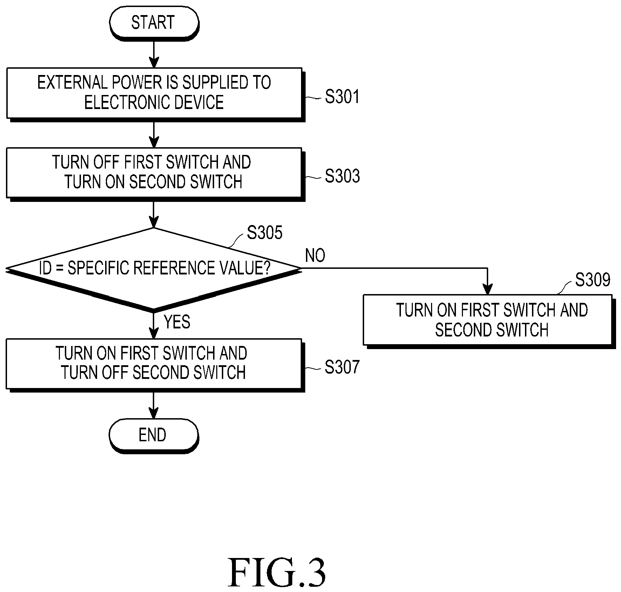

FIG. 3 illustrates a control method of a power supply circuit in an electronic device according to an embodiment of the present invention.

External power may be supplied to the electronic device in step S301. The controller 30 may be provided with the external power from the connector 10, as illustrated in FIG. 2. Accordingly, the controller 30 may determine whether the external power is provided. For example, the controller 30 may determine that the external power is provided if a level of power received on a line, to which the external power is applied from the connector 10, exceeds a threshold.

If it is determined that the external power is provided to the connector 10 in step S301, the controller 30 may control the first switch 20 to be switched to the OFF state, and control the second switch 40 to be switched to the ON state in step S303. In other words, the controller 30 may control the first switch 20 not to output the external power to the system (not shown). More specifically, when the external power is provided, the controller 30 may control the first switch 20 to be switched to the OFF state. The controller 30 may control the second switch 40 to be switched to the ON state. As a result, if it is determined that the external power is provided, the controller 30 may first control the switches 20 and 40 so that the external power may not be provided to the system and the power from the battery 50 may be provided to the system.

As the first switch 20 is controlled to be switched to the OFF state, the power provided from the battery 50 may be prevented from flowing backward to the connector 10.

The controller 30 may determine whether ID data has a specific reference value in step S305. In an embodiment, a reference value of the ID data may be a resistance value. The ID data may indicate the type of a device inserted into a terminal of the connector 10, or the type of data applied to the connector 10. For example, if the ID data has a first resistance value, it may indicate that the device inserted into the terminal of the connector 10 is a USB cable. As another example, if the ID data has a second resistance value, it may indicate that the external power applied to the connector 10 is for a test process.

If it is determined that the ID data has a specific resistance value (Yes in step S305), the controller 30 may control the first switch 20 to be switched to the ON state and control the second switch 40 to be switched to the OFF state in step S307. For example, it will be assumed that the specific resistance value is the second resistance value indicating that the external power applied to the connector 10 is for the test process. If it is determined that the ID data has the second resistance value, the controller 30 may control the second switch 40 to be switched to the OFF state. In other words, the controller 30 may control the switches 20 and 40 so that the battery 50 and the system may not be connected to each other.

For example, when the external power for the test process is provided, if the battery 50 is connected to the system, a test error is likely to occur. Accordingly, if the external power for the test process is provided, the battery 50 should not be connected to the system. The controller 30 may determine that the external power is for the test process, by determining whether the ID data has a specific resistance value. If the external power is for the test process, the controller 30 may control the second switch 40 to be switched to the OFF state so that the battery 50 may not be connected to the system.

As described above, in the test process, the battery 50 may not be connected to the system, so the probability of error occurring in the test process may be significantly reduced. In addition, an electronic device of the related art has a disadvantage in that it should undergo the test process before the battery 50 is mounted therein. However, in an electronic device in certain embodiments of the present invention, even after the battery 50 is mounted in the electronic device, the battery 50 may not be connected to the system in the aforesaid manner, which averts time limitations of a process of mounting the battery 50

In addition, as the first switch 20 is controlled to be switched to the ON state, the external power may be provided to the system.

If the ID data does not have the specific resistance value (No in step S305), the controller 30 may control the first switch 20 to be switched to the ON state and control the second switch 40 to be switched to the ON state in step S309. In other words, the controller 30 may control the switches 20 and 40 so that both of the external power and the power from the battery 50 may be provided to the system.

For example, it will be assumed that the specific resistance value is the second resistance value indicating that the external power applied to the connector 10 is for the test process. The controller 30 may control the second switch 40 to be switched to the ON state, if it determines that the ID data has the first resistance value indicating that the type of a device inserted into a terminal of the connector 10 is a USB cable. In other words, the controller 30 may control the switches 20 and 40 so that the battery 50 and the system may be connected to each other. For example, if the type of the device inserted into the terminal of the connector 10 is a USB cable, the battery 50 does not need to be disconnected from the system, so the controller 30 may control the switches 20 and 40 so that both of the power provided from the battery 50 and the external power may be provided to the system.

The controller 30 may control the switches 20 and 40 so that the battery 50 may not be connected to the system when the external power is for the test process, among various cases.

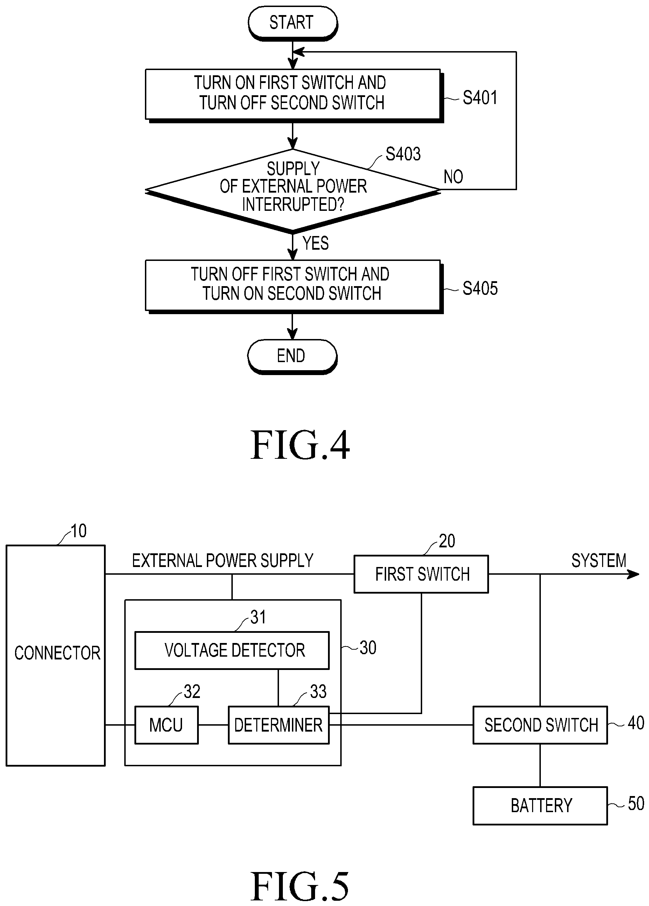

FIG. 4 illustrates a control method of a power supply circuit in an electronic device according to another embodiment of the present invention. The control method in FIG. 4 may follow the control method in FIG. 3.

External power and ID data may be input to the electronic device. The controller 30 may determine that the ID data has a specific value. In this case, the controller 30 may control the first switch 20 to be switched to the ON state and control the second switch 40 to be switched to the OFF state in step S401. In other words, the controller 30 may control the switches 20 and 40 so that only the external power may be provided to the system and the power provided from the battery 50 may not be provided to the system. Accordingly, the battery 50 and the system may not be connected to each other.

In other words, the controller 30 may determine based on the ID data that the above process corresponds to the situation in which the battery 50 should not be connected to the system. In this case, the controller 30 may control the second switch 40 between the battery 50 and the system to be switched to the OFF state.

The controller 30 may determine whether the supply of the external power is interrupted in step S403. The controller 30 may receive the external power provided from the connector 10, as illustrated in FIG. 2. Accordingly, the controller 30 may determine whether the supply of the external power is interrupted. For example, the controller 30 may determine that the supply of the external power is interrupted, if a level of power received on a line, to which the external power is applied from the connector 10, is less than or equal to a threshold (Yes in step S403).

If it is determined that the external power is continuously provided (No in step S403), the controller 30 controls the first switch 20 to be switched to the ON state and control the second switch 40 to be switched to the OFF state. In other words, the controller 30 prevents the battery 50 and the system from being disconnected from each other.

If it is determined that the supply of the external power is interrupted (Yes in step S403), the controller 30 may control the first switch 20 to be switched to the OFF state and control the second switch 40 to be switched to the ON state in step S405. In other words, the controller 30 may control the second switch 40 so that the battery 50 and the system may be connected to each other, and may control the battery 50 to provide its power to the system. In addition, by controlling the first switch 20 to be switched to the OFF state, the controller 30 may prevent the power provided from the battery 50 from flowing backward to the connector 10.

FIG. 5 is a block diagram of an electronic device according to another embodiment of the present invention.

As illustrated in FIG. 5, the electronic device may include a connector (or any other suitable type of interface) 10, a first switch (or any other suitable type of component for selectively interrupting an electrical path) 20, a controller 30, a second switch (or any other suitable type of component for selectively interrupting an electrical path) 40, and a battery 50. The controller 30 may include a voltage detector 31, a Micro Controller Unit (MCU) 32, and a determiner 33.

The controller 10 may receive external power and output it to the voltage detector 31. The voltage detector 31 may detect a voltage of the external power, and output the detected voltage value of the external power to the determiner 33. In this case, the determiner 33 determines whether the external power is provided, upon receiving a detected voltage value that exceeds a voltage Vref. The determiner 33 may determine that the external power is not provided, upon receiving a detected voltage value that is less than or equal to the voltage Vref.

Based on its detected voltage value of the external power, the voltage detector 31 may directly output, to the determiner 33, information indicating whether the external power is provided. For example, the voltage detector 31 may determine that the external power is provided, if it is determined that its detected voltage value exceeds the voltage Vref. If it is determined that the detected voltage value is less than or equal to the voltage Vref, the voltage detector 31 may determine that the external power is not provided. The voltage Vref may be, for example, 3.1V.

The MCU 32 may receive ID data from the connector 10. The MCU 32 may determine whether the ID data has a specific reference value.

In an embodiment, a reference value of the ID data may be a resistance value. The MCU 32 may detect a resistance value of the ID data, and determines whether it corresponds to a specific resistance value. For example, the MCU 32 may determine that the resistance value of the ID data is a specific resistance value, if a difference between the resistance value of the ID data and the specific resistance value is less than a threshold.

The MCU 32 may generate a JIG_ON signal and output it to the determiner 33, if it determines that the ID data has a specific resistance value. The MCU 32 may output no JIG_ON signal, if it determines that the ID data does not have a specific resistance value.

While receiving the JIG_ON signal, if it is determined that the external power is provided, the determiner 33 may control the first switch 20 to be switched to the ON state and control the second switch 40 to be switched to the OFF state. More specifically, the determiner 33 may generate an ON-state control signal and output it to the first switch 20. For example, if the first switch 20 is implemented with an FET switch, the determiner 33 may apply a gate voltage so as to control the first switch 20 to be switched to the ON state. The determiner 33 may generate an OFF-state control signal, and output it to the second switch 40. For example, if the second switch 40 is implemented with an FET switch, the determiner 33 may apply a gate voltage so as to control the second switch 40 to be switched to the OFF state.

While receiving no JIG_ON signal, if it is determined that the external power is provided, the determiner 33 may control both of the first and second switches 20 and 40 to be switched to the ON state.

More specifically, the determiner 33 may generate an ON-state control signal and output it to the first switch 20. For example, if the first switch 20 is implemented with an FET switch, the determiner 33 may apply a gate voltage so as to control the first switch 20 to be switched to the ON state. Similarly, the determiner 33 may generate an ON-state control signal and output it to the second switch 40. For example, if the second switch 40 is implemented with an FET switch, the determiner 33 may apply a gate voltage so as to control the second switch 40 to be switched to the ON state.

In addition, if it is determined that the external power is not provided, the determiner 33 may control the first switch 20 to be switched to the OFF state, and control the second switch 40 to be switched to the ON state.

More specifically, the determiner 33 may generate an OFF-state control signal and output it to the first switch 20. For example, if the first switch 20 is implemented with an FET switch, the determiner 33 may apply a gate voltage so as to control the first switch 20 to be switched to the OFF state. The determiner 33 may generate an ON-state control signal and output it to the second switch 40. For example, if the second switch 40 is implemented with an FET switch, the determiner 33 may apply a gate voltage so as to control the second switch 40 to be switched to the ON state.

The above-described process may be summarized in Table 1 below.

**Table 1**

| JIG_ON Signal | External Power | First Switch | Second Switch |
|---|---|---|---|
| ○ | ○ | ON | OFF |
| × | ○ | ON | ON |
| × | × | OFF | ON |

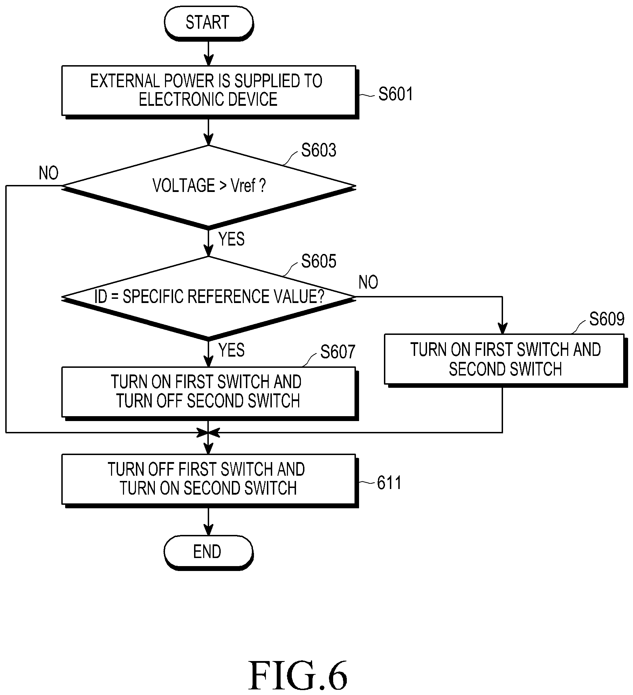

FIG. 6 illustrates a control method of a power supply circuit in an electronic device according to another embodiment of the present invention.

External power may be supplied to the electronic device in step S601. The voltage detector 31 or the determiner 33 may determine whether a voltage of the external power is greater than a voltage Vref in step S603.

If it is determined that the voltage of the external power is less than or equal to the voltage Vref (No in step S603), the controller 30 may determine that the external power is not provided. In this case, the controller 30 may control the first switch 20 to be switched to the OFF state and control the second switch 40 to be switched to the ON state in step S611, enabling the battery 50 to provide its power to the system.

If it is determined that the voltage of the external power is greater than the voltage Vref (Yes in step S603), the MCU 32 may determine whether the ID data has a specific reference value in step S605. If it is determined that the ID data has a specific reference value (Yes in step S605), the MCU 32 may generate and output a JIG_ON signal. While receiving the JIG_ON signal, if it is determined that the external power is provided, the determiner 33 may control the first switch 20 to be switched to the ON state and control the second switch 40 to be switched to the OFF state in step S607. Accordingly, the determiner 33 may control the switches 20 and 40 so that the battery 50 and the switch may not be connected to each other.

If it is determined that the ID data does not have the specific reference value (No in step S605), the MCU 32 does not generate the JIG_ON signal. Upon failure to receive a JIG_ON signal even though it is determined that the external power is provided, the determiner 33 may control both of the first and second switches 20 and 40 to be switched to the ON state in step S609. As a result, both of the power provided from the battery 50 and the external power may be controlled to be provided to the system.

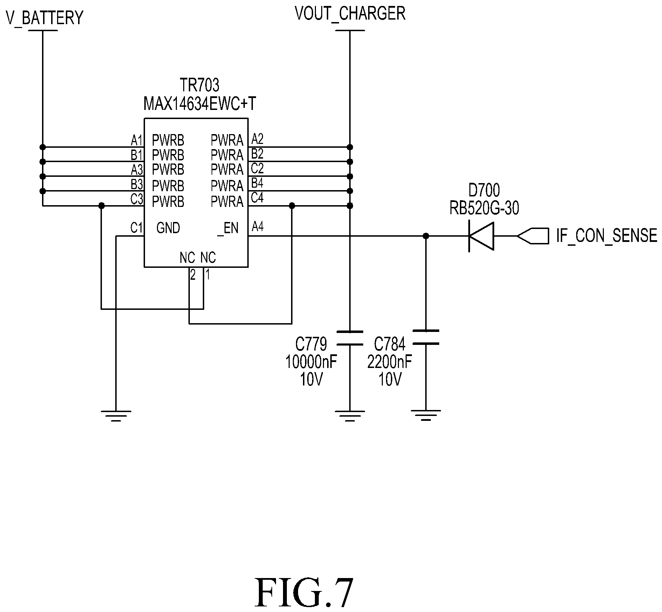

FIG. 7 illustrates a circuit diagram comprising a second switch and certain other components and features according to an embodiment of the present invention. As illustrated, the second switch (TR703 MAX14634EWC+T) is connected to V_BATTERY, which may indicate that V_BATTERY is connected to the battery 50. In addition, the second switch (TR703 MAX14634EWC+T) is connected to VOUT_CHARGER, which may indicate that VOUT_CHARGER is connected to the system. The second switch (TR703 MAX14634EWC+T) is also connected to IF_CON_SENSE, which may indicate that IF_CON_SENSE is connected to the controller 30 or the determiner 33. Between IF_CON_SENSE and the second switch (TR703 MAX14634EWC+T) may be connected an amplifier (D700 RB520G-30), which may amplify an output signal from the controller 30 or the determiner 33 with a gain, and output it to the second switch (TR703 MAX14634EWC+T).

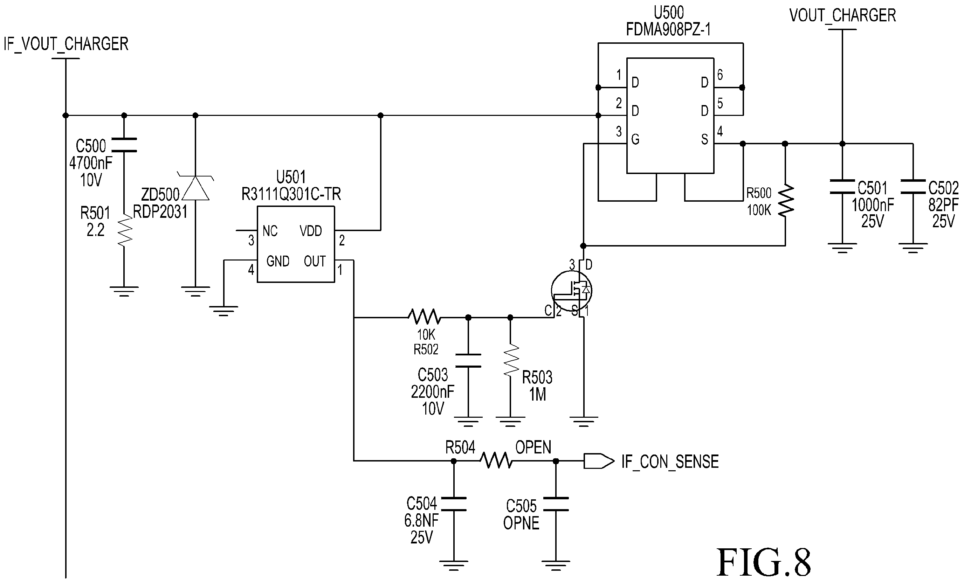

FIG. 8 illustrates a circuit diagram comprising a first switch, a controller and certain other components and features according to an embodiment of the present invention.

As illustrated, a comparator (U501R3111Q301C+TR) is connected to IF_VOUT_CHARGER, which may indicate that IF_VOUT_CHARGER is connected to an external power supply line of the connector 10. In addition, the first switch (U500FDMA908PZ-1) is connected to IF_CON_SENSE, which may indicate that IF_CON_SENSE is connected to the controller 30 or the determiner 33. Between IF_CON_SENSE and the first switch (U500FDMA908PZ-1) may be disposed the determiner 33 comprised of resistors and capacitors. The first switch (U500FDMA908PZ-1) is connected to VOUT_CHARGER, which may indicate that VOUT_CHARGER is connected to the system.

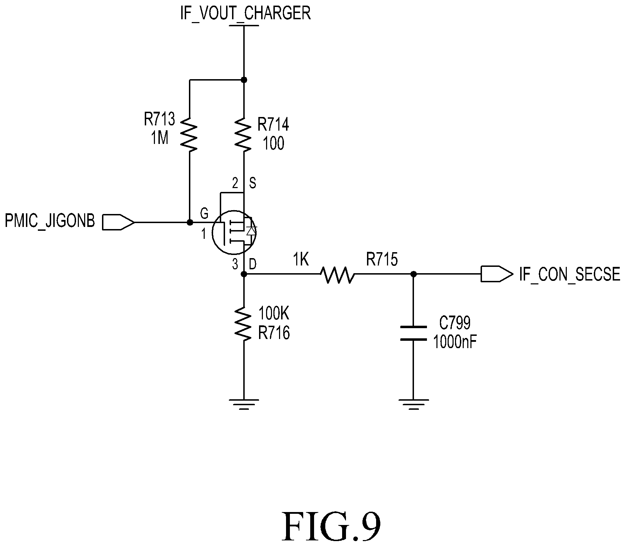

FIG. 9 illustrates a circuit diagram comprising a determiner and certain other components and features. As illustrated, the determiner is connected to PMIC_JIONB, which may indicate that PMIC_JIONB is connected to the MCU. In addition, the determiner is connected to IF_VOUT_CHARGER, which may indicate that IF_VOUT_CHARGER is connected to an external power supply line of the connector 10. An output terminal of the determiner may be represented as IF_CON_SENSE.

The circuit diagrams of FIGs. 7 to 9 are merely illustrative, and it will be apparent to those of ordinary skill in the art that one or more components of the circuit diagrams illustrated herein may be replaced and/or modified to perform the same or similar functions. In addition, it will be apparent to those of ordinary skill in the art that the scope of the present invention is not limited to the circuit diagrams of FIGs. 7 to 9.

As is apparent from the foregoing description, certain embodiments of the present invention may provide a power supply circuit for an electronic device capable of interrupting the power supply from a battery depending on ID data and external power, an electronic device comprising the power supply circuit, and a control method thereof. Accordingly, electronic devices with a USB connector may be provided, contributing to miniaturization and standardization of products such as a smart phone or tablet PC.

Exemplary embodiments of the present invention can be implemented in the form of hardware, software, or any combination of hardware and software. Such software may be stored, for example, in any suitable type of volatile or non-volatile storage or recordable medium, whether or not erasable or re-recordable, for example a Read-Only Memory (ROM) a Random Access Memory (RAM), memory chip, device or integrated circuit, an optically or magnetically recordable and machine-readable storage medium, such as a Compact Disc (CD), a Digital Versatile Disk (DVD), a magnetic disk, a magnetic tape, or the like.

It will be appreciated that the storage devices and storage media are embodiments of machine-readable storage that are suitable for storing one or more programs comprising instructions or code that, when executed, implement certain exemplary embodiments of the present invention. Accordingly, certain embodiments of the present invention provide a program comprising instructions or code for implementing a system, device, apparatus and/or method according to any aspect, claims or embodiment disclosed herein, and a machine-readable storage storing such a program. Such a program may be electronically conveyed through any suitable medium, for example in the form of a communication signal delivered through a wired or a wireless connection, and certain exemplary embodiments suitably encompass the same.

While the present invention has been shown and described with reference to certain exemplary embodiments thereof, it will be understood by those skilled in the art that various changes in form and details may be made therein without departing from the scope of the present invention, as defined by the appended claims.

## Claims

1. A power supply circuit for an electronic device, comprising:
a connector (10) configured to receive external power and Identifier, ID, data;
a first switch (20) disposed between the connector (10) and a system of the electronic device, wherein the first switch (20) is configured to be switched to an ON state such that the external power supplied from the connector (10) is output to the system, and an OFF state such that the external power supplied from the connector (10) is not output to the system;
a second switch (40) disposed between a battery (50) and the system, wherein the second switch (40) is configured to be switched to an ON state such that power of the battery (50) is output to the system, and an OFF state such that the power of the battery (50) is not output to the system; and
a controller (30) configured to control the ON and OFF states of each of the first (20) and second (40) switches based on the ID data,
wherein, when the external power is supplied from the connector (10), the controller (30) is configured to: control the first switch (20) to be in the ON state and the second switch (40) to be in the OFF state, if the ID data has a predetermined value; and control the first switch (20) to be in the ON state and the second switch (40) to be in the ON state, if the ID data does not have the predetermined value.

2. The power supply circuit of claim 1, further comprising the battery (50) for supplying power to the system.

3. The power supply circuit of claim 2, wherein if it is determined that the external power is not provided to the connector (10), the controller (30) is further configured to control the connector (10) to be disconnected from the system, and control the battery (50) to be connected to the system, to provide power from the battery (50) to the system.

4. The power supply circuit of claim 3, wherein the controller (30) is further configured to control the first switch (20) to be switched to the OFF state and control the second switch (40) to be switched to the ON state.

5. The power supply circuit of any preceding claim, wherein the controller (30) is further configured to determine whether the external power is provided to the connector by comparing a voltage on a line, to which external power is applied from the connector (10), with a set voltage, and determining whether the external power is provided based on results of the comparison.

6. The power supply circuit of claim 5, wherein the controller (30) comprises a voltage detector (31) for detecting the voltage on the line, to which the external power is applied from the connector (10), and
wherein the voltage detector (31) is configured to determine that the external power is provided, if the voltage on the line is greater than the set voltage, and the voltage detector (31) is further configured to determine that the external power is not provided, if the voltage on the line is less than or equal to the set voltage.

7. The power supply circuit of any preceding claim, wherein the controller (30) further comprises:
a Micro Controller Unit, MCU, (32) configured to output a JIG_ON signal, if the ID data received via the connector (10) has a specific reference value; and
a determiner (33) configured to generate and output a control signal for the first (20) and second (40) switches based on whether the JIG_ON signal is received from the MCU (32) and whether the external power is provided to the connector (10).

8. The power supply circuit of any preceding claim, wherein the connector (10) comprises a micro Universal Serial Bus, USB, connecter, and the external power is input to a VBAT2 pin of the micro USB connector.

9. A control method of a power supply circuit for an electronic device, comprising:
determining (S301) whether external power is provided via a connector (10);
receiving Identifier, ID, data via the connector (10); and
controlling (S305, S307, S309), based on the ID data, the ON and OFF states of a first (20) switch disposed between the connector (10) and a system of the electronic device, and a second (40) switch disposed between a battery (50) and the system,
wherein, when the first switch (20) is switched to the ON state, external power provided via the connector (10) is output to the system, and when the first switch (20) is switched to the OFF state, external power provided via the connector (10) is not output to the system, and
wherein, when the second switch (40) is switched to the ON state, power of the battery (50) is output to the system, and when the second switch (40) is switched to the OFF state, power of the battery (50) is not output to the system,
wherein, when the external power is provided via the connector (10), the step of controlling (S305, S307, S309) comprises:
controlling the first switch (20) to be in the ON state and the second switch (40) to be in the OFF state, if the ID data has a predetermined value; and
controlling the first switch (20) to be in the ON state and the second switch (40) to be in the ON state, if the ID data does not have the predetermined value.

10. The control method of claim 9, wherein the step of determining (S301) whether the external power is provided via the connector (10) comprises:
comparing (S403, S603) a voltage on a line, to which external power is applied from the connector (10), with a set voltage; and
determining whether the external power is provided to the connector (10), based on the comparison results.

## Patentansprüche

1. Stromversorgungsschaltung für eine elektronische Vorrichtung, die Folgendes umfasst:
einen Verbinder (10), der so konfiguriert ist, dass er externe Stromversorgungs- und Identifikator-, ID-, Daten empfängt;
einen ersten Schalter (20), der zwischen dem Verbinder (10) und einem System der elektronischen Vorrichtung angeordnet ist, wobei der erste Schalter (20) so konfiguriert ist, dass er in einen EIN-Zustand geschaltet wird, so dass der externe Strom, der von dem Verbinder (10) angelegt wird, an das System ausgegeben wird, und in einen AUS-Zustand geschaltet wird, so dass der externe Strom, der von dem Verbinder (10) angelegt wird, nicht an das System ausgegeben wird;
einen zweiten Schalter (40), der zwischen einer Batterie (50) und dem System angeordnet ist, wobei der zweite Schalter (40) so konfiguriert ist, dass er in einen EIN-Zustand geschaltet wird, so dass der Strom der Batterie (50) an das System ausgegeben wird, und in einen AUS-Zustand geschaltet wird, so dass der Strom der Batterie (50) nicht an das System ausgegeben wird; und
eine Steuereinheit (30), die so konfiguriert ist, dass sie die EIN- und AUS-Zustände jedes der ersten (20) und zweiten (40) Schalter basierend auf den ID-Daten steuert,
wobei, wenn der externe Strom von dem Verbinder (10) angelegt wird, die Steuerung (30) für Folgendes konfiguriert ist: Steuern des ersten Schalters (20), so dass er sich im EIN-Zustand befindet, und des zweiten Schalters (40), so dass er sich im AUS-Zustand befindet, wenn die ID-Daten einen vorbestimmten Wert aufweisen; und Steuern des ersten Schalters (20), so dass er sich im EIN-Zustand befindet, und des zweiten Schalters (40), so dass er sich im EIN-Zustand befindet, wenn die ID-Daten den vorbestimmten Wert nicht aufweisen.

2. Stromversorgungsschaltung nach Anspruch 1, die ferner die Batterie (50) zum Anlegen von Strom an das System umfasst.

3. Stromversorgungsschaltung nach Anspruch 2, wobei, wenn bestimmt wird, dass der externe Strom nicht an den Verbinder (10) angelegt wird, die Steuerung (30) ferner für Folgendes konfiguriert ist: Steuern des Verbinders (10), so dass er von dem System getrennt wird, und Steuern der Batterie (50), so dass sie mit dem System verbunden wird, um Strom von der Batterie (50) an das System anzulegen.

4. Stromversorgungsschaltung nach Anspruch 3, wobei die Steuerung (30) ferner so konfiguriert ist, dass sie den zu schaltenden ersten Schalter (20) in den AUS-Zustand schaltet und den zu schaltenden zweiten Schalter (40) in den EIN-Zustand schaltet.

5. Stromversorgungsschaltung nach einem der vorhergehenden Ansprüche, wobei die Steuerung (30) ferner dafür konfiguriert ist, zu bestimmen, ob der externe Strom an den Verbinder angelegt wird, indem eine Spannung auf einer Leitung, an die ein externer Strom von dem Verbinder (10) angelegt wird, mit einer Soll-Spannung verglichen wird, und basierend auf den Ergebnissen des Vergleichs bestimmt wird, ob der externe Strom angelegt wird.

6. Stromversorgungsschaltung nach Anspruch 5, wobei die Steuerung (30) einen Spannungsdetektor (31) zum Erfassen der Spannung auf der Leitung aufweist, an die der externe Strom von dem Verbinder (10) angelegt wird, und
wobei der Spannungsdetektor (31) so konfiguriert ist, dass er bestimmt, dass der externe Strom angelegt wird, wenn die Spannung auf der Leitung größer als die Soll-Spannung ist, und
wobei der Spannungsdetektor (31) ferner so konfiguriert ist, dass er bestimmt, dass der externe Strom nicht angelegt wird, wenn die Spannung auf der Leitung kleiner oder gleich der Soll-Spannung ist.

7. Stromversorgungsschaltung nach einem der vorhergehenden Ansprüche, wobei die Steuerung (30) ferner Folgendes umfasst:
eine Mikrosteuereinheiteinheit (Micro Controller Unit, MCU) (32), die dafür konfiguriert ist, ein JIG_ON-Signal auszugeben, wenn die über den Verbinder (10) empfangenen ID-Daten einen spezifischen Referenzwert aufweisen; und
eine Bestimmungsvorrichtung (33), die dafür konfiguriert ist, ein Steuersignal für den ersten (20) und zweiten (40) Schalter zu erzeugen und auszugeben, basierend darauf, ob das JIG_ ON-Signal von der MCU (32) empfangen wird und ob der externe Strom an den Verbinder (10) angelegt wird.

8. Stromversorgungsschaltung nach einem der vorhergehenden Ansprüche, wobei der Verbinder (10) einen Mikro-Universal-Serial-Bus-, USB-, Verbinder umfasst und der externe Strom in einen VBAT2-Verbinder des Mikro-USB-Verbinders eingegeben wird.

9. Steuerverfahren einer Stromversorgungsschaltung für eine elektronische Vorrichtung, das Folgendes umfasst:
Bestimmen (S301), ob externer Strom über einen Verbinder (10) angelegt wird;
Empfangen von Identifikator-, ID-, Daten über den Verbinder (10); und
Steuern (S305, S307, S309), basierend auf den ID-Daten, der EIN- und AUS-Zustände eines ersten (20) Schalters, der zwischen dem Verbinder (10) und einem System der elektronischen Vorrichtung angeordnet ist, und eines zweiten (40) Schalters, der zwischen einer Batterie (50) und dem System angeordnet ist,
wobei, wenn der erste Schalter (20) in den EIN-Zustand geschaltet wird, ein externer Strom, der über den Verbinder (10) bereitgestellt wird, an das System ausgegeben wird, und wenn der erste Schalter (20) in den AUS-Zustand geschaltet wird, ein externer Strom, der über den Verbinder (10) bereitgestellt wird, nicht an das System ausgegeben wird, und
wobei, wenn der zweite Schalter (40) in den EIN-Zustand geschaltet wird, ein Strom der Batterie (50) an das System ausgegeben wird, und wenn der zweite Schalter (40) in den AUS-Zustand geschaltet wird, ein Strom der Batterie (50) nicht an das System ausgegeben wird,
wobei, wenn der externe Strom über den Verbinder (10) bereitgestellt wird, der Schritt des Steuerns (S305, S307, S309) Folgendes umfasst:
Steuern des ersten Schalters (20), so dass er sich im EIN-Zustand befindet, und des zweiten Schalters (40), so dass er sich im AUS-Zustand befindet, wenn die ID-Daten einen vorbestimmten Wert aufweisen; und
Steuern des ersten Schalters (20), so dass er sich im EIN-Zustand befindet, und des zweiten Schalters (40), so dass er sich im EIN-Zustand befindet, wenn die ID-Daten den vorbestimmten Wert nicht aufweisen.

10. Steuerungsverfahren nach Anspruch 9, wobei der Schritt des Bestimmens (S301), ob der externe Strom über den Verbinder (10) angelegt wird, Folgendes umfasst:
Vergleichen (S403, S603) einer Spannung auf einer Leitung, an die ein externer Strom von dem Verbinder (10) angelegt wird, mit einer Soll-Spannung; und
Bestimmen, basierend auf den Vergleichsergebnissen, ob der externe Strom an den Verbinder (10) angelegt wird.

## Revendications

1. Un circuit d'alimentation électrique destiné à un dispositif électronique, comprenant :
un connecteur (10) configuré de façon à recevoir une alimentation électrique externe et des données d'identifiant, ID,
un premier commutateur (20) disposé entre le connecteur (10) et un système du dispositif électronique, où le premier commutateur (20) est configuré de façon à être commuté vers un état MARCHE de sorte que l'alimentation électrique externe fournie à partir du connecteur (10) soit produite en sortie vers le système, et un état ARRÊT de sorte que l'alimentation électrique externe fournie à partir du connecteur (10) ne soit pas produite en sortie vers le système,
un deuxième commutateur (40) disposé entre une batterie (50) et le système, où le deuxième commutateur (40) est configuré de façon à être commuté vers un état MARCHE de sorte qu'une alimentation électrique de la batterie (50) soit produite en sortie vers le système, et un état ARRÊT de sorte que l'alimentation électrique de la batterie (50) ne soit pas produite en sortie vers le système, et
un dispositif de commande (30) configuré de façon à commander les états MARCHE et ARRÊT de chacun des premier (20) et deuxième (40) commutateurs en fonction des données d'identifiant,
où, lorsque l'alimentation électrique externe est fournie à partir du connecteur (10), le dispositif de commande (30) est configuré de façon à : commander le premier commutateur (20) de façon à être dans l'état MARCHE et le deuxième commutateur (40) de façon à être dans l'état ARRÊT si les données d'identifiant possèdent une valeur prédéterminée, et commander le premier commutateur (20) de façon à être dans l'état MARCHE et le deuxième commutateur (40) de façon à être dans l'état MARCHE si les données d'identifiant ne possèdent pas la valeur prédéterminée.

2. Le circuit d'alimentation électrique selon la Revendication 1, comprenant en outre la batterie (50) destinée à la fourniture d'une alimentation électrique au système.

3. Le circuit d'alimentation électrique selon la Revendication 2, où, s'il est déterminé que l'alimentation électrique externe n'est pas fournie au connecteur (10), le dispositif de commande (30) est configuré en outre de façon à commander le connecteur (10) de façon à être déconnecté du système et à commander la batterie (50) de façon à être raccordée au système, afin de fournir une alimentation électrique de la batterie (50) au système.

4. Le circuit d'alimentation électrique selon la Revendication 3, où le dispositif de commande (30) est configuré en outre de façon à commander le premier commutateur (20) de façon à être commuté vers l'état ARRÊT et à commander le deuxième commutateur (40) de façon à être commuté vers l'état MARCHE.

5. Le circuit d'alimentation électrique selon l'une quelconque des Revendications précédentes, où le dispositif de commande (30) est configuré en outre de façon à déterminer si l'alimentation électrique externe est fournie au connecteur par la comparaison d'une tension sur une ligne, à laquelle une alimentation électrique externe est appliquée à partir du connecteur (10), à une tension définie, et la détermination si l'alimentation électrique externe est fournie en fonction de résultats de la comparaison.

6. Le circuit d'alimentation électrique selon la Revendication 5, où le dispositif de commande (30) comprend un détecteur de tension (31) destiné à la détection de la tension sur la ligne à laquelle l'alimentation électrique externe est appliquée à partir du connecteur (10), et
où le détecteur de tension (31) est configuré de façon à déterminer que l'alimentation électrique externe est fournie si la tension sur la ligne est supérieure à la tension définie, et le détecteur de tension (31) est configuré en outre de façon à déterminer que l'alimentation électrique externe n'est pas fournie si la tension sur la ligne est inférieure ou égale à la tension définie.

7. Le circuit d'alimentation électrique selon l'une quelconque des Revendications précédentes, où le dispositif de commande (30) comprend en outre :
une unité de microcontrôleur, MCU, (32) configurée de façon à produire en sortie un signal JIG_ON si les données d'identifiant reçues par l'intermédiaire du connecteur (10) possèdent une valeur de référence spécifique, et
un dispositif de détermination (33) configuré de façon à générer et produire en sortie un signal de commande pour les premier (20) et deuxième (40) commutateurs selon que le signal JIG_ON est reçu à partir de la MCU (32) et que l'alimentation électrique externe est fournie au connecteur (10).

8. Le circuit d'alimentation électrique selon l'une quelconque des Revendications précédentes, où le connecteur (10) comprend un micro-connecteur bus série universel, USB, et l'alimentation électrique externe est envoyée en entrée vers une broche VBAT2 du micro-connecteur USB.

9. Un procédé de commande d'un circuit d'alimentation électrique destiné à un dispositif électronique, comprenant :
la détermination (S301) si une alimentation électrique externe est fournie par l'intermédiaire d'un connecteur (10),
la réception de données d'identifiant, ID, par l'intermédiaire du connecteur (10), et
la commande (S305, S307, S309), en fonction des données d'identifiant, des états MARCHE et ARRÊT d'un premier (20) commutateur disposé entre le connecteur (10) et un système du dispositif électronique et d'un deuxième (40) commutateur disposé entre une batterie (50) et le système,
où, lorsque le premier commutateur (20) est commuté vers l'état MARCHE, une alimentation électrique externe fournie par l'intermédiaire du connecteur (10) est produite en sortie vers le système, et lorsque le premier commutateur (20) est commuté vers l'état ARRÊT, une alimentation électrique externe fournie par l'intermédiaire du connecteur (10) n'est pas produite en sortie vers le système, et
où, lorsque le deuxième commutateur (40) est commuté vers l'état MARCHE, une alimentation électrique de la batterie (50) est produite en sortie vers le système, et, lorsque le deuxième commutateur (40) est commuté vers l'état ARRÊT, une alimentation électrique de la batterie (50) n'est pas produite en sortie vers le système,
où, lorsque l'alimentation électrique externe est fournie par l'intermédiaire du connecteur (10), l'opération de commande (S305, S307, S309) comprend :
la commande du premier commutateur (20) de façon à être dans l'état MARCHE et du deuxième commutateur (40) de façon à être dans l'état ARRÊT si les données d'identifiant possèdent une valeur prédéterminée, et
la commande du premier commutateur (20) de façon à être dans l'état MARCHE et du deuxième commutateur (40) de façon à être dans l'état MARCHE si les données d'identifiant ne possèdent pas la valeur prédéterminée.

10. Le procédé de commande selon la Revendication 9, où l'opération de détermination (S301) si l'alimentation électrique externe est fournie par l'intermédiaire du connecteur (10) comprend :
la comparaison (S403, S603) d'une tension sur une ligne, à laquelle une alimentation électrique externe est appliquée à partir du connecteur (10), à une tension définie, et
la détermination si l'alimentation électrique externe est fournie au connecteur (10) en fonction des résultats de la comparaison.
